# EUROPEAN PATENT APPLICATION

(11) **EP 2 607 647 A1**
(43) Date of publication of application: **26.06.2013**
(21) Application number: 12198211.0
(22) Date of filing: 19.12.2012
(51) Int. Cl.: F02B 47/02, F02M 25/022, F02M 25/028, B60K 11/00

(54) **Charge-Cooling Method and Apparatus**

(30) Priority: 21.12.2011 GB 201121942
(71) Applicant: Nissan Motor Manufacturing (UK) Ltd., Cranfield Bedfordshire MK43 0DB (GB)
(72) Inventor: Ette, John Michael, Cranfield, Bedfordshire MK430DB (GB)

(57) **Abstract**

A method and system 10 for charge-cooling an internal combustion engine 32 of a vehicle comprising capturing condensate water produced by an air-conditioning system 12 of the vehicle in use and using that water in charge-cooling during operation of the engine.

## Description

Improved fuel efficiency is becoming increasingly important in the automotive industry. One known way of increasing fuel efficiency, which also has several further advantages, is to provide charge-cooling by either injecting water into the internal combustion engine intake plenum / combustion chamber, or alternatively onto a heat-exchanger surface of a forced-induction intercooler. It has been demonstrated that, under the correct conditions, this has a number of benefits including increased performance and reduced emissions.

A disadvantage of utilising water in this way is that a suitably large reservoir of water must be carried on-board the vehicle. In turn, this results in additional weight having to be carried on the vehicle which can negate any performance advantages otherwise gained by charge-cooling. Furthermore, ensuring that the reservoir is suitably replenished at regular intervals makes such systems unpopular.

According to a first aspect of the present invention, there is provided a method of charge-cooling an internal combustion engine of a vehicle, the method comprising capturing condensate water produced by an air-conditioning system of the vehicle in use and using that water in charge-cooling during operation of the engine.

According to a second aspect of the present invention, there is provided a charge-cooling system for an internal combustion engine of a vehicle, the system comprising a water-capture facility for capturing condensate water produced by an air-conditioning system of the vehicle in use and for supplying the captured water to the engine for charge-cooling during operation of the engine.

According to a third aspect of the present invention, there is provided an air-conditioning system for a vehicle, the system having a water-capture facility for capturing condensate water produced by the system in use and for supplying the captured water for charge-cooling during operation of an internal combustion engine of the vehicle.

According to a fourth aspect of the present invention, there is provided a vehicle operating in accordance with the method of the first aspect of the present invention, or having the system of the second or third aspects of the present invention.

It will further be understood that features or advantages of different aspects of the present invention may be combined or substituted where context allows.

Furthermore, the term 'charge-cooling' is intended to encompass any method in which water is used to cool the charge, such as water injection, intercooler spraying etc.

Embodiments of the present invention will now be described, by way of example only, with reference to the accompanying drawings, in which:-
Fig. 1 is a schematic drawing illustrating the layout of an internal combustion engine and HVAC unit in accordance with the present invention;
Fig. 2A is a graph schematically illustrating the correlation between condensate level produced versus outside air temperature;
Fig. 2B is a graph schematically illustrating the correlation between water injection requirements versus outside air temperature; and
Fig. 3 is a flow diagram schematically illustrating the logic followed by the method of the present invention.

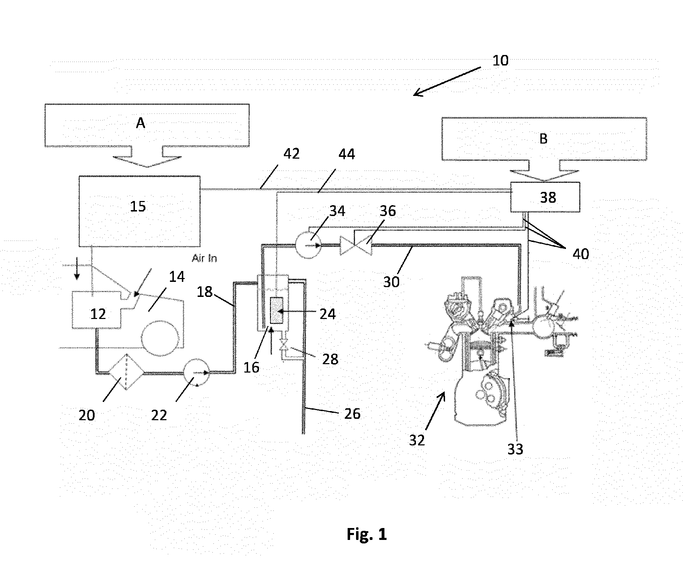

With reference to Fig. 1, a vehicle internal combustion system arrangement 10 comprises a Heating Ventilation and Air Conditioning (HVAC) unit 12 mounted in a vehicle 14; the HVAC unit 12 is controlled by an HVAC control unit 15 which is used to control the vehicle cabin environment and condensate production, as discussed subsequently. A set of control parameters A provides the input variables for the HVAC control unit 15; these consist of, for example, outside and inside air temperature, humidity, evaporator temperature, user control settings etc. The HVAC unit 12 is connected to a water reservoir 16 by a connecting pipe 18 provided with an in-line filter 20 and water pump 22. In the present embodiment, the filter 20 comprises a replaceable reticulated foam filter which filters out any debris or other impurities (such as pollen etc.) in the water produced as condensate by the HVAC unit 12; however, it will be appreciated that many different types of filter are equally suitable for this application.

The water reservoir 16 further has a water level sensor 24 and an overflow outlet pipe 26 which allows excess water in the reservoir 16 to drain to the ground beneath the vehicle or alternatively to another reservoir in the vehicle (such as the washer fluid reservoir for example). A solenoid-operated drain valve 28 is also provided to drain the reservoir 16 through the overflow outlet pipe 26 when desired.

A transfer pipe 30 connects the water reservoir 16 to a petrol or diesel internal combustion engine generally designated 32. In the present embodiment, the transfer pipe 30 connects to a water injector 33 mounted to a cylinder of the engine 32; however, it could alternatively connect to a forced-induction intercooler arrangement. An in-line high pressure pump 34 and a non-return valve 36 are also provided on the transfer pipe 30 between the water reservoir 16 and the internal combustion engine 32.

Operation of the high pressure pump 34, non-return valve 36 and water injector 33 is controlled and co-ordinated by the Engine Control Unit (ECU) 38 and communication links 40 as described subsequently. Further communication links 42 and 44 are also provided between the water level sensor 24 and the ECU 38 and between the ECU 38 and the HVAC control unit 15; this allows the ECU 38 to request the production of additional water from the HVAC unit 12 when the water reservoir 16 level is low and / or demand for injected water is high due to engine performance demands. A set of control parameters B provide the vehicle power train condition input variables for the ECU 38; these consisting of, for example, engine speed load, torque requirement, coolant temperature, fuel quality, inlet temperature, boost pressure, knock detection etc.

Heating Ventilation and Air Conditioning (HVAC) units typically produce water during operation. This is due to relatively warm, moist air drawn from outside the vehicle (or inside the cabin during recirculation) condensing on relatively cool parts of the unit (in particular the evaporator coil). In current systems, this condensate water by-product is typically discarded onto the ground beneath the vehicle. By contrast, during operation of the apparatus of the present invention, this condensate water is instead captured. Air is drawn into the HVAC unit 12 from outside the vehicle and is cooled by the HVAC unit 12; this produces water condensate which is pumped along the connecting pipe 18 and through the water filter 20 by water pump 22. The condensate water then collects in reservoir 16.

When required, the ECU 38 can control the high pressure pump 34 to pump the required quantity of water out of the reservoir 16, along transfer pipe 30 and into the combustion chamber by way of the water injector 33.

In controlling use of the water from reservoir 16, the ECU 38 monitors parameters such as intake air temperature and load conditions and instructs water injection to occur as a function of air-fuel ratio. Each water injector 33 on each cylinder pulses in coordination with fuel injectors on the engine 32 to produce the required air-fuel-water ratio for optimum power, NOx emissions, CO2 emissions, knock prevention or efficiency, as determined by the engine control calibration.

The ECU 38 also manages the level of water in the reservoir 16 by monitoring the water level sensor 24 reading at any given time and comparing this with operating conditions. For example, if the level in reservoir 16 is low / empty, the ECU 38 will assess the operating conditions (ambient air temperature, driving style, fuel quality etc.) and will determine if expected water injection requirements dictate that the reservoir 16 needs more water from the HVAC unit 12. To minimise overall vehicle weight, the level of water in the reservoir 16 does not therefore always need to be high, but instead can be optimally managed.

If water levels are low in the reservoir 16, and / or conditions require possible injection of water, the ECU 38 sends a signal along link 42 informing the HVAC control unit 15 that additional condensate is required from the HVAC unit 12. The HVAC control unit 15 then determines if additional condensate can be produced (by switching on the air-conditioning loop of the HVAC unit 12 if it is not currently on) whilst maintaining cabin comfort. Note that one benefit of modern automatic automotive HVAC units is that they can be configured to de-humidify (and hence produce condensate water) whilst still heating the cabin using internal air control.

Once the reservoir 16 is full, additional condensate produced by normal operation of the HVAC unit 12, driven by cabin comfort requirements, will exit the reservoir through overflow pipe 26 and drain to the ground. In addition, all water in reservoir 16 can be drained to the ground using drain valve 28 whenever this is required. An example of a scenario where this would be desirable would be to prevent freezing of the water in the reservoir 16 during winter months (an outside air temperature sensor can provide this information and its signal can be used to control the solenoid of the drain valve 28).

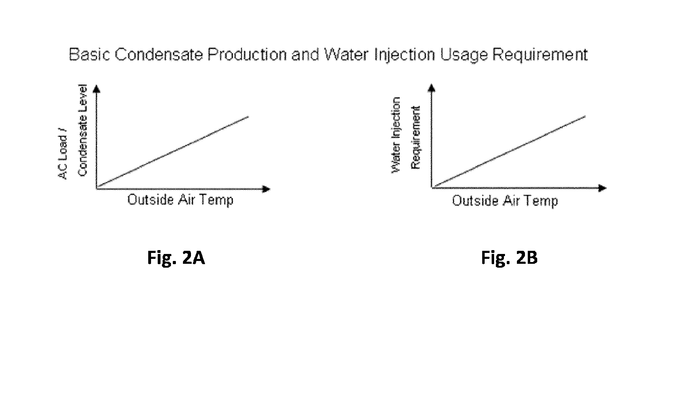

Although, it may not always be possible to produce additional condensate water and maintain cabin comfort, water injection is only desired in internal combustion engines in certain conditions, and conveniently these conditions tend to overlap. With reference to the graphs shown in Fig. 2A and 2B, the needs of the water injection system can be closely matched to the relatively constant small amounts of water produced by the AC cooling loop of the HVAC unit 12. In other words, the internal combustion engine 32 is more likely to require water injection when operating in higher ambient temperatures, which in turn often relates to a higher production of condensate. It will be appreciated that Fig. 2A illustrates a general correlation between condensate level produced versus outside air temperature without taking into account changes in humidity.

The below table, denotes example logic which may be used in determining whether to fill the reservoir 16 for a given set of conditions:

| | **High Load Driving Conditions** (e.g. towing, sustained hard acceleration and steep gradients) | **Low- Medium Load Driving Conditions** |
|---|---|---|
| **High Ambient Air Temp** | Fill reservoir 16 | Fill reservoir 16 (in case of sudden high torque requirement) |
| **Medium Ambient Air Temp** | Fill reservoir 16 | Empty (direct condensate to ground) |
| **Low Ambient Air Temp** | Empty (direct condensate to ground) | Empty (direct condensate to ground) |

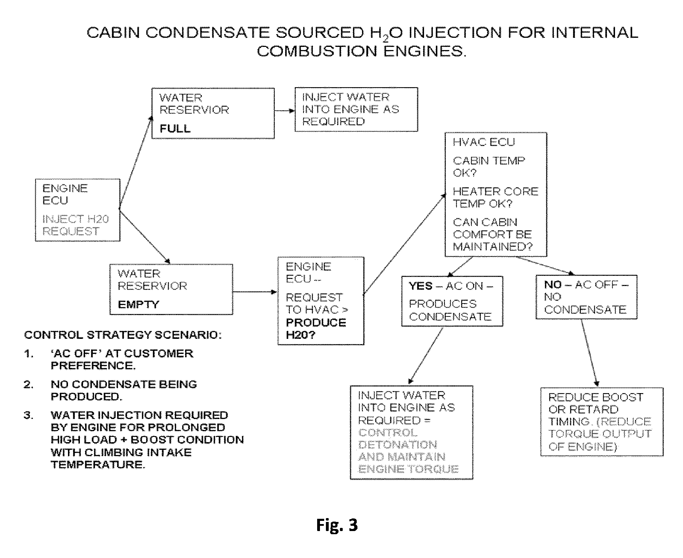

Furthermore, the flow diagram in Fig. 3 denotes an example logic which may be used when a request to inject water is made by the ECU 38. This flow diagram is representative of a typical scenario of the system in use in which the ECU constantly monitors the level of condensate in the reservoir and operating conditions of the engine to determine if water generation and/or water charging are needed. As illustrated, if the demand to produce water for charge cooling would be detrimental to the cabin conditions or occupant comfort, then the HVAC system may not necessarily be used, and alternative engine control strategies can be used instead.

This promotes system efficiency and reduces the need for a large reservoir.

It can therefore be seen that the presently described invention provides an improved arrangement for providing charge-cooling by way of water injection into an internal combustion engine, which in turn provides significant advantages in terms of engine performance, emissions, and thermal / fuel efficiency by allowing the engine to run at higher compression ratios and / or with more advanced timing.

In addition to the previously described advantages, the present invention also offers the following, non-exhaustive list of additional advantages:-
- Water injection can be used at full load to allow higher boost levels in forced-induction engines, and increased engine performance, without the need for additional fuelling to prevent knocking or detonation;
- Water injection can allow an engine to run safely on lower quality fuels, which can be a benefit in developing countries;
- The increased efficiency of the engine can offset the air-conditioning compressor power requirement, meaning that when air-conditioning is switched on there is less of a compromise for power and efficiency than in existing systems. This means that occupant / cabin comfort can be maintained, with a lower impact on fuel economy.
- Less water is discarded onto the ground under the vehicle since more of it will be expelled as vapour in the exhaust gas emissions; this is more satisfying for the user since apparent water "leakages" under the vehicle can be concerning.
- Although a small amount of water will often be transported on-board the vehicle in the reservoir 16, this can be kept to a minimum in view of the water level management capability previously described; this results in a lightweight, efficient system.
- The user does not have to fill the vehicle with water at any time, but if provision is made for the user to replenish the reservoir, replenishment is rarely, if ever, necessary.

Modifications and improvements may be made to the foregoing, without departing from the scope of the invention, for example:-

In the embodiment described above, charge-cooling is provided by injecting water into the combustion chamber by way of the water injector associated with that chamber; however, similar charge-cooling can alternatively be provided by spraying the water onto the heat-exchanger surface of a forced-induction intercooler or into an air intake plenum for example.

Rather than providing the pump 22, the reservoir 16 can be provided below the HVAC unit 12 such that condensate can be gravity-fed into the reservoir 16.

## Claims

1. A method of charge-cooling an internal combustion engine of a vehicle, the method comprising capturing condensate water produced by an air-conditioning system of the vehicle in use and using that water in charge-cooling during operation of the engine.

2. The method of Claim 1, further comprising selectively instructing the air-conditioning system to create condensate water when ambient outside conditions are suited to creation of said condensate water and / or when driving conditions would benefit from charge-cooling.

3. The method of Claim 2, further comprising instructing the air-conditioning system to stop creating condensate water when ambient outside conditions are not suited to creation of said condensate water and / or when driving conditions would not benefit from charge-cooling.

4. The method of any preceding claim, further comprising capturing the condensate water in an on-board reservoir.

5. The method of Claim 4, further comprising monitoring the level of condensate water in the on-board reservoir, assessing ambient outside conditions, assessing current or expected driving conditions, determining expected charge-cooling requirements and determining whether the level of condensate water in the on-board reservoir is sufficient to sustain said charge-cooling requirements.

6. The method of Claim 5, further comprising selectively instructing the air-conditioning system to produce condensate water if the level of condensate water in the on-board reservoir is determined to be insufficient, and instructing the air-conditioning system to either stop producing condensate water, or to direct any condensate water produced to the ground or other fluid reservoir, if the level of condensate water is determined to be sufficient.

7. The method of any preceding claim, further comprising using an on-board ECU to control a control system of the air-conditioning system.

8. A charge-cooling system for an internal combustion engine of a vehicle, the system comprising a water-capture facility for capturing condensate water produced by an air-conditioning system of the vehicle in use and for supplying the captured water to the engine for charge-cooling during operation of the engine.

9. The system of Claim 8, further comprising a reservoir for storing at least a portion of the condensate water.

10. The system of Claim 9, further comprising a water level sensor for sensing the level of condensate water in the reservoir.

11. The system of Claims 9 or Claim 10, wherein the reservoir is gravity-fed from the air-conditioning system.

12. The system of any of Claims 9 to 11, further comprising a pump to pump condensate water from the air-conditioning system into the reservoir.

13. The system of any of Claims 9 to 12, further comprising an overflow arrangement which may be selectively utilised to allow condensate water in the reservoir to be emptied to the ground or to another fluid reservoir.

14. The system of any of Claims 8 to 13, further comprising a filter arrangement to filter out any debris in the condensate water prior to use in the engine.

15. The system of any of Claims 8 to 14, wherein the air-conditioning system is part of an on-board HVAC unit.

16. The system of any of Claims 8 to 15, further comprising an on-board ECU linked to a control system of the air-conditioning system.

17. An air-conditioning system for a vehicle, the system having a water-capture facility for capturing condensate water produced by the system in use and for supplying the captured water for charge-cooling during operation of an internal combustion engine of the vehicle.

18. A vehicle operating in accordance with the method of any of Claims 1 to 7 or having the system of any of Claims 8 to 16 or Claim 17.

19. A method of charge-cooling, substantially as hereinbefore described with reference to, or as illustrated in, any of the accompanying drawings.

20. A charge-cooling system, substantially as hereinbefore described with reference to, or as illustrated in, any of the accompanying drawings.
